# EUROPEAN PATENT APPLICATION

(11) **EP 1 538 025 A1**
(43) Date of publication of application: **08.06.2005**
(21) Application number: 03447283.7
(22) Date of filing: 04.12.2003
(51) Int. Cl.: B60Q 1/54, B60Q 1/44, G01C 21/00, G01C 23/00, G01P 1/08, G01S 1/04, G01S 5/14

(54) **Speed indicator system using GPS signals for indicating the speed of a vehicle to persons outside the vehicle**

(71) Applicant: KADEB, 7700 Moeskroen (BE)
(72) Inventor: Debaillie, Karel, 7700 Moeskroen (BE)
(74) Representative: Luys, Marie-José A.H.

(57) **Abstract**

A speed indicator system (1; 2) for indicating the speed of a vehicle to persons outside the vehicle, the system comprising one or more input means (10, 40) for generating one or more input signals from which the speed of the vehicle is derivable, processing means (20) connected to the input means (10, 40) for determining a speed value from the input signal(s) and display means (30; 60) connected to the processing means (20) for displaying the speed value to persons outside the vehicle, the input means comprising a global positioning device (10) which is provided to communicate with satellites in a global positioning system for generating successive positions as first input signal for the processing means (20), and the processing means (20) being provided for determining the speed value from the successive positions.

## Description

The present invention relates to a speed indicator system according to the preamble of the first claim. The invention further relates to a vehicle according to claim 11.

EP-A-0 997 344 discloses a speed indicator system comprising an outwardly visible display for displaying the speed of the vehicle to persons outside the vehicle. The speed indicator system comprises processing means for converting a speed signal, which is received from a speed sensor, into a speed indication, which is shown on the display.

The speed indicator system known from EP-A-0 997 344 has the disadvantage that it must be adapted for each vehicle in which it is installed.

It is an aim of the present invention to provide a speed indicator system with which the need of adaptation to the vehicle can be avoided.

This aim is achieved according to the invention with a speed indicator system showing the technical characteristics of the characterising part of the first claim.

The speed indicator system of the invention comprises one or more input means for generating one or more input signals form which the speed of the vehicle can be determined. The input signal(s) are supplied to processing means, which determine a speed value from the input signal(s). This speed value is passed on to display means, which are provided for displaying the speed value to persons outside the vehicle. One of the input means is a global positioning device, which generates values indicative of successive positions of the vehicle by communication with satellites of a global positioning system. These successive positions are provided to the processing means, which derive the speed of the vehicle from them.

An analysis of the problem of the prior art has shown that the speed signal which is nowadays provided as a built-in feature of vehicles is influenced by a number of vehicle-dependent factors. Different vehicle constructors use different speed sensors, resulting in different speed signals so that adaptation or at least configuration of the speed indicator system is essential. Even if the speed signal would be standardised, the problem would not disappear, since the speed signal is also dependent on the tire size of the tires mounted on the vehicle, so that a change of tire size would affect the speed signal and lead to incorrect information for the speed indicator system.

In the speed indicator system of the invention, the input signal which is used for generating the speed indication comes from a global positioning device, which is a source of information external to the vehicle and as such delivers information independent from the type of the vehicle or the tire size. With the use of the global positioning information, the need for connecting to a speed sensor can be avoided. As a result, the speed indicator system of the invention can be directly built into a wide variety of vehicles without having to adapt or configure the speed indicator system. With the speed indicator of the invention, it may thus be avoided to design, manufacture and store a variety of speed indicators adapted to different vehicle types. As a result, the speed indicator of the invention may constitute a cost-effective application for a wide variety of vehicles.

Furthermore, by using the global positioning device which retrieves information by wireless telecommunication, the need for applying a wired connection to the vehicle's speed sensor can be avoided. As a result, the speed indicator system of the invention can be assembled and sold to consumers in a single, closed housing, which can be made watertight and sealed against intrusion. In this way, it can be prevented that users tamper with the speed indicator system of the invention.

The speed indicator system of the invention preferably further comprises an accelerometer as second input means. This accelerometer supplies an acceleration/deceleration signal to the processing means, which can use this second input signal on top of the position information of the global positioning device for determining the speed value. The accelerometer is useful for enhancing the accuracy of the speed value, especially in case of sudden speed variations, since there is a relatively large time interval between two successive positions supplied by most present day global positioning devices.

The processing means preferably select between the position signal of the global positioning device and the acceleration/deceleration signal of the accelerometer for determining the speed value. The selection is preferably based on a threshold value of the acceleration/deceleration signal: in case the speed is relatively constant the acceleration or deceleration is zero or small and the global positioning information can be used for determining the speed, whereas in case of a varying speed the acceleration or deceleration is large and the acceleration/deceleration signal is used for proportionally varying the speed value on the display. When the speed is again substantially constant, the global positioning information is used again, so that any error in the speed value as a result of the acceleration or deceleration is removed. As a result, this alternative use of both signals can result in a highly accurate speed value.

In a preferred embodiment of the speed indicator system of the invention, the processing means are also provided for determining a deceleration value from its input signal(s). This deceleration value is passed on to the display means along with the speed value. In this embodiment, the display means comprise one or more indicators which react to the deceleration value and display the degree of deceleration to the persons outside the vehicle.

The speed indicator system of the invention is preferably battery powered. In order to warn the user that the battery power is low, the system preferably comprises an indicator for indicating near emptiness of the battery.

The invention will be further elucidated by means of the following description and the appended figures.

Figure 1 schematically shows a first embodiment of the speed indicator system of the invention.

Figure 2 schematically shows a second embodiment of the speed indicator system of the invention.

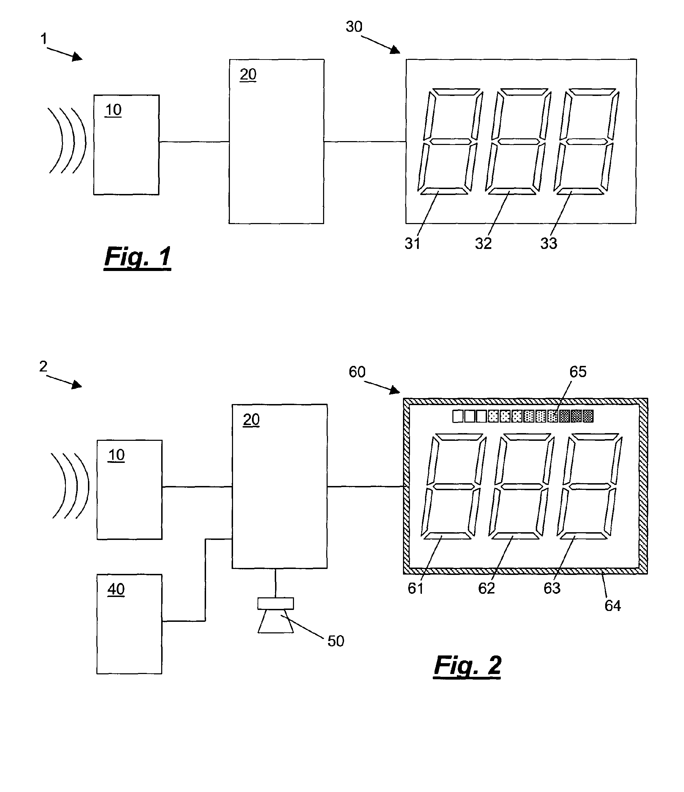

The speed indicator system 1 of figure 1 comprises a global positioning device 10 as input device, a microprocessor 20 electronically connected to the global positioning device 10 and a display 30 electronically connected to the microprocessor 20. The system 1 is provided for being mounted in or on a vehicle (not shown), such as for example a car or a truck or another vehicle, with the display 30 directed towards the traffic behind the vehicle. The display 30 has three digits 31, 32, 33 for displaying a speed value, which is supplied by the microprocessor 20. This microprocessor 20 determines the speed value from successive GPS coordinates, which are generated by the global positioning device 10 as a result of wireless telecommunication with GPS satellites (not shown). As GPS delivers information on the change of the location of the vehicle in time, the vehicle's speed can be calculated from the GPS information.

The speed indicator system 1 has only a wireless signal external to the vehicle as source of information for determining its speed value. This has the advantage that the speed value which is in use actually shown on the display is not influenced by vehicle dependent factors, such as for example tire size, speed sensor type, constructor or other. Furthermore, this independence makes it possible to construct the system as a closed box, i.e. with all the elements mounted in a single, closed housing. In this way, it can be prevented that users tamper with the speed indicator system 1.

The speed indicator system 1 of figure 1 is preferably powered by means of a battery, which can be incorporated into the closed housing. Alternatively, the electrical power may also be supplied by the electric circuit of the vehicle, in which case the speed indicator system 1 may for example be connected to the cigarette lighter socket of the vehicle.

The speed indicator system 2 of figure 2 differs firstly from that of figure 1 in a number of additional components. More particularly, the system 2 comprises an accelerometer 40 for supplying a second input signal to the microprocessor 20, a display 60 with additional indicators 64, 65 and an indicator 50 for indicating near emptiness of the battery (not shown) to the user.

In the speed indicator system 2 of figure 2, the microprocessor is supplied with two input signals, namely the GPS information and an acceleration/deceleration signal from the accelerometer 40. The microprocessor 20 evaluates both signals for determining the speed value which is to be supplied to the display 60. More particularly, the speed value is determined alternatively by means of the GPS information and the acceleration/deceleration signal from the accelerometer 40. The selection of which signal to use is made by means of the acceleration/deceleration signal. As long as the acceleration or deceleration remains below a given threshold value, the GPS information is used since this provides an accurate speed value when the vehicle travels at a substantially constant speed. When the vehicle accelerates or slows down, the refresh rate of the GPS information may become too slow and the acceleration/deceleration signal, which then provides accurate information, is used for varying the speed value. Typically, the refresh rate of GPS information nowadays is two seconds, whereas present day accelerometers can perform 50 or more measurements per second. This shows that the accelerometer signal is very useful to bridge the time interval between the supply of two successive GPS coordinates. The use of the accelerometer does not obstruct the possibility of a complete system 2 in a single, closed housing, since it does not require any connection to parts of the vehicle for conducting its measurement.

The microprocessor 20 of the system of figure 2 further calculates a deceleration value from its two input signals, which is also supplied to the display 60. This deceleration value is normally calculated from the output signal of the accelerometer 40, since the refresh rate of most presently available global positioning devices 10 is too low for this purpose. The deceleration value, which is for example negative or zero when the vehicle accelerates and positive when the vehicle slows down, controls two indicators of the display 60. In the case of deceleration (i.e. when the deceleration value becomes positive) a ribbon 65 is activated and a number of LEDs proportional to the deceleration value is lit. As a result, more LEDs are lit when the deceleration is higher. The LEDs of the ribbon also vary in colour, which gives a further indication of the degree of deceleration. Furthermore, when the deceleration is above a given threshold value, which means that the speed of the vehicle decreases quickly, the border 64 of the display starts flashing to further warn the traffic behind the vehicle.

The displays 30 and 60 of figures 1 and 2 have three digits for displaying the speed value in km/h. The displays 30, 60 may however also have less or more digits, for example for also displaying decimals of the speed value, or may be provided for displaying the speed in mph or another unit. Optionally, the displays 30, 60 may be further provided with a cruise-control indication (not shown) for further informing traffic behind the vehicle that the driver has switched on cruise control and travels at a substantially constant speed.

In the displays 30 and 60, the digits 31-33, 61-63 and the additional indicators 64, 65 are illuminated by means of LEDs. However, they may also be illuminated by means of any other light emitting means known to the person skilled in the art.

The speed indicator system 2 of figure 2 is powered by a battery (not shown). In order to ensure that the user can timely replace the battery, the system is provided with the indicator 50 for indicating near emptiness of the battery, which is an audio alarm. Alternatively, the indicator 50 may be a visual indicator or both or any other indicator known to the person skilled in the art. The system 2 may also be provided with a socket (not shown) for attaching an electric power cable and connecting the system 2 to the electric circuit of the vehicle when the battery is almost empty.

The microprocessor 20 of each speed indicator system 1, 2 may be provided with a memory (not shown) for storing a speed history. In this way, the speed indicator 1, 2 has the additional function of a "black box", like for example in airplanes, from which the speed of the vehicle before for example a collision may be retrieved. The speed history may for example comprise 5 minutes or any other period of time.

## Claims

1. A speed indicator system (1; 2) for indicating the speed of a vehicle to persons outside the vehicle, the system comprising one or more input means (10, 40) for generating one or more input signals from which the speed of the vehicle is derivable, processing means (20) connected to the input means (10, 40) for determining a speed value from the input signal(s) and display means (30; 60) connected to the processing means (20) for displaying the speed value to persons outside the vehicle, **characterised in that** the input means comprise a global positioning device (10) which is provided to communicate with satellites in a global positioning system for generating successive positions as first input signal for the processing means (20), and that the processing means (20) are provided for determining the speed value from the successive positions.

2. A speed indicator system according to claim 1, **characterised in that** the input means further comprises an accelerometer (40) for measuring speed variations of the vehicle and providing an acceleration/deceleration signal as second input signal to the processing means (20), the processing means (20) being provided for evaluating the acceleration/deceleration signal along with the successive positions coming from the global positioning device (10)

3. A speed indicator system according to claim 2, **characterised in that** the processing means (20) are provided for selecting between the successive positions and the acceleration/deceleration signal for determining the speed value, the selection being determined by a first predetermined threshold value of the acceleration/deceleration signal.

4. A speed indicator system according to any one of the claims 1-3, **characterised in that** the processing means (20) are further provided for determining a deceleration value from the input signal(s) and that the display means (60) comprise one or more indicators (64, 65) for indicating a degree of deceleration to persons outside the vehicle, the indicators (64, 65) being controlled by the deceleration value.

5. A speed indicator system according to claim 4, **characterised in that** a first indicator (64) of the display means (60) comprises a flashing light which is activated when the deceleration value is above a second predetermined threshold value.

6. A speed indicator system according to claim 4 or 5, **characterised in that** a second indicator (65) of the display means (60) comprises a series of LEDs of which a number proportional to the deceleration value is activated.

7. A speed indicator system according to any one of the claims 1-6, **characterised in that** the display means (30; 60) comprise a plurality of digits (31-33; 61-63) for displaying the speed value.

8. A speed indicator system according to any one of the claims 1-7, **characterised in that** the system is powered by a battery and that the system further comprises an indicator (50) for indicating near emptiness of the battery.

9. A speed indicator system according to any one of the claims 1-8, **characterised in that** it is mounted in a single, closed housing.

10. A speed indicator system according to any one of the claims 1-9, **characterised in that** the processing means (20) are provided with a memory for storing a speed history.

11. A vehicle which is provided with a speed indicator system according to any one of the claims 1-10.
